# EUROPÄISCHE PATENTSCHRIFT

(11) **EP 1 987 476 B1**
(45) Veröffentlichungstag und Bekanntmachung des Hinweises auf die Patenterteilung: **13.04.2016**
(21) Anmeldenummer: 07721930.1
(22) Anmeldetag: 14.02.2007
(51) Int. Cl.: G06K 19/073, G06K 19/077

(54) **SICHERHEITS- UND/ODER WERTDOKUMENT**
SECURITY AND/OR VALUABLE DOCUMENT
DOCUMENT DE SÉCURITÉ ET/OU DE VALEUR

(30) Priorität: 21.02.2006 DE 102006008345
(43) Veröffentlichungstag der Anmeldung: 05.11.2008
(60) Teilanmeldung: 12007464.6
(73) Patentinhaber: Bundesdruckerei GmbH, 10958 Berlin (DE)
(72) Erfinder: KUHN, Christian, 10958 Berlin (DE)
(74) Vertreter: Jungblut, Bernhard Jakob
(86) Internationale Anmeldenummer: PCT/DE2007/000313
(87) Internationale Veröffentlichungsnummer: WO 2007/095913

(56) Entgegenhaltungen:
- WO-A-01/22359
- DE-A1- 19 805 282

## Beschreibung

Die Erfindung bezieht sich auf ein Sicherheits- und/oder Wertdokuraent mit einer elektronischen Transponderschaltung, wobei die Transponderschaltung mit einer vorzugsweise aber nicht notwendigerweise flächigen Transponderantenne elektrisch verbunden ist, sowie ein Verfahren zur Herstellung eines solchen Dokumentes. Als Sicherheits- und/oder Wertdokumente kommen insbesondere in Frage: Personalausweise, Reisepässe, Banknoten, Schecks, Führerscheine sowie Postwertzeichen.

Hintergrund der Erfindung und Stand der Technik.

Sicherheits- und/oder Wertdokumente des eingangs genannten Aufbaus sind aus der Praxis bekannt. Hierbei handelt es sich beispielsweise um Reisepässe, in welche ein die elektronische Transponderschaltung bildender Chip einlaminiert ist, der einerseits einen Speicher zur Speicherung von Daten und andererseits eine mit dem Speicher verbundene Steuerschaltung aufweist, die den Empfang von eine Speicherauslesung initialisierenden Signalen sowie die Sendung von Signalen, die Daten enthalten, steuert. Typischerweise sind solche Transponderschaltungen in der üblichen Siliziumtechnologie ausgebildet. Die Transponderschaltung ist wiederum mit einer einlaminierten Drahtantenne aus einem metallischen Werkstoff verbunden, welche als Empfangselement für die Speicherauslesung initialisierende Signal, als Empfangselement für die Betriebsenergie der Transponderschaltung vermittelnde elektromagnetische Strahlung, und als Sendeelement zur Aussendung von Signalen mit Daten, dient. Mit anderen Worten ausgedrückt, die Drahtantenne ist Sende- und Empfangsantenne für Signale, sowie im Falle passiver Transponder Empfangselement für Energie übertragende Strahlung.

Die vorstehende Technologie hat sich zum Auslesen von Daten aus Sicherheits- und/oder Wertdokumenten und elektronischer Überprüfung der Daten durch Datenabgleich, beispielsweise mit den Daten eines Servers, gut bewährt. Bei einfachen Anwendungen, beispielsweise der simplen Auslesung der Daten ohne weitere Vorort-Hardware zur Evaluierung oder Anzeige der Daten (beispielsweise wenn lediglich die Passage einer einen Pass mit führenden Person registriert werden soll), hat jedoch eine das Dokument an eine Transponderauslesevorrichtung haltende Bedienperson keine unmittelbare und einfache Kontrolle, ob tatsächlich eine Auslesung der Transponderschaltung erfolgreich erfolgt ist. Auch ist es mitunter vorgesehen, dass nach Auslesen des Transponders an einer ersten Kontrollstelle eine zweite Kontrollstelle subsequent passiert werden muss, wobei es wünschenswert wäre, dass an der zweiten Kontrollstelle ohne weiteren apparativen Aufwand anhand des Dokumentes erkennbar ist, ob bei der ersten Kontrollstelle eine ordnungsgemäße Auslesung der Transponderschaltung erfolgt ist. Schließlich ist es wünschenswert, dass ein Träger des Dokumentes erkennen kann, ob vor kurzem eine Auslesung erfolgte, insbesondere auch zur Erkennung eventueller unberechtigter Ausleseversuche.

Das Dokument DE 198 05 282 betrifft beispielsweise ein Wertdokument, wie beispielsweise eine Kreditkarte oder eine Bankkarte mit einer Energieversorgung, beispielsweise einer induktiv eingekoppelten Spule und einer Elektrolumineszenzeinrichtung zur Anzeige des Betriebszustandes.

Das Dokument WO 01/22359 betrifft eine IC-Karte, welche berührungslos ausgelesen werden kann, mit einer lichtemittierenden Diode (LED), welche ein Fenster mit einem farbigen Material, was nach Belichtung seine Farbe ändert, beleuchtet, so dass der Kartenbesitzer, Zugriff auf seine Karte bemerken kann.

Des Weiteren ist die bisherige Technologie des Einlaminierens der Transponderantenne aufwändig.

Technisches Problem der Erfindung.

Der Erfindung liegt daher das technische Problem zu Grunde, ein Sicherheits- und/oder Wertdokument anzugeben, welches eine versuchte und/oder vollendete Auslesung der Transponderschaltung einem Träger bzw. Inhaber des Dokumentes oder einer das Dokument überprüfenden anderen Person anzeigt. Der Erfindung liegt das weitere technische Problem zu Grunde, Mittel zur Herstellung eines Sicherheits- und Wertdokumentes anzugeben, welche zudem vergleichsweise einfach ausführbar sind.

Grundzüge der Erfindung und bevorzugte Ausführungsformen.

Zur Lösung des erstgenannten technischen Problems lehrt die Erfindung ein Sicherheits- und/oder Wertdokument gemäß Anspruch 1.

Der Begriff der Anzeige ist hierbei in aller Allgemeinheit zu verstehen und umfasst die Erzeugung eines beliebigen Signals, das von einer Person ggf. mit, vorzugsweise jedoch ohne technische Hilfsmittel wahrnehmbar ist.

Vorzugsweise weisen die Mittel zur Anzeige einer Aktivierung der Transponderantenne eine Relaxationszeit auf. Hiermit ist gemeint, dass das Signal nicht nur während der Aktivierung der Transponderantenne erzeugt wird, sondern auch für einen definierten Zeitraum nach Aktivierung und folgender Deaktivierung der- Transponderantenne anhält. Es versteht sich dabei, dass die Signalemission reversibel ist, i.e. kein dauerhaftes Signal mit einer einzigen Aktivierung der Transponderantenne erzeugt wird. Als Relaxationszeiten kommen Zeiten im Bereich von 0,1 s bis 1 Tag, vorzugsweise 1 s bis 10 h, höchstvorzusgweise 1 s bis 1 h, insbesondere 1 s bis 10 min., in Frage. Dadurch ist eine Steuerung der Mittel zur Anzeige der Aktivierung der Transponderantenne nicht zwingend erforderlich, da das Signal gleichsam, selbstverlöschend ist. Es versteht sich, dass jedoch auch eine zeitabhängige Steuerung der Anzeigemittel durch die Transponderschaltung von der Erfindung umfasst ist, wobei die Relaxationszeit dann in der Transponderschaltung programmiert ist.

Mit der Erfindung wird erreicht, dass ein Träger bzw. Inhaber des Dokumentes und/oder eine das Dokument kontrollierende andere Person erkennen kann, ob eine Auslesung des Transponders versucht wurde. Dabei ist es unerheblich, ob die Auslesung auch tatsächlich erfolgreich durchgeführt wurde, da die Mittel zur Anzeige einer Aktivierung der Transponderantenne unabhängig von der erfolgreichen Datenübertragung ein Signal stets dann erzeugen, wenn die Transponderantenne durch eine Abfrage oder auch nur einen Abfrageversuch aktiviert worden ist. Der Träger des Dokumentes kann auf diese Weise beispielsweise einen unauthorisierten Versuch einer Auslesung des Transponders feststellen. Eine Kontrollperson kann auf einfache Weise feststellen, ob bei einer zuvor durchlaufenen Kontrollstation überhaupt ein Abfrageversuch durchgeführt wurde, i.e. ob die zuvor durchlaufene Kontrollstation ordnungsgemäß durchlaufen wurde. Hierbei braucht die Kontrollperson nicht feststellen zu können, ob die Abfrage an der Kontrollstation erfolgreich war, da bei Mißerfolg der Träger des Dokumentes bereits bei der Kontrollstation zur weiteren Klärung aufgehalten werden wird.

Im Rahmen der Erfindung kann vorgesehen sein, dass die Transponderantenne und/oder die Transponderschaltung mit optischen Anzeigemitteln verbunden ist, deren optische Eigenschaften sich bei Aktivierung der Transponderantenne reversibel verändern.

Die optischen Anzeigemittel werden durch den Empfang der von der Transponderantenne ausgesandten elektromagnetischen Strahlung aktiviert.

Die Veränderung der optischen Eigenschaften umfasst: Veränderung der Farbe im Sichtbaren, Veränderung der Transmission und/oder Reflektion im UV-, sichtbaren, oder IR-Bereich, Veränderung der Polarisation, Emission von Licht im UV-, sichtbaren, oder IR-Bereich, beispielsweise durch Elektrolumineszenz oder Photolumineszenz, wobei die vorstehenden Veränderungen zusätzlich abhängig sein können von einer Co-Aktivierung, beispielsweise durch Einstrahlung von Licht, beispielsweise UV Licht.

Der Begriff der reversiblen Änderung bedeutet, dass die optischen Eigenschaften sich mit der Aktivierung der Transponderantenne sich von einem Ruhezustand zu einem hinsichtlich der optischen Eigenschaften hiervon verschiedenen Aktivierungszustand verändern, jedoch nach Deaktivierung der Transponderantenne sich wieder der Ruhezustand einstellt, ggf. mit der vorstehend angesprochenen Relaxationszeit.

Das zweite technische Problem wird in bevorzugter Ausbildung der Erfindung dadurch gelöst, dass die Transponderantenne, ggf. elektrische Verbindungen zwischen Transponderschaltung und Transponderantenne und/oder zwischen Transponderschaltung und Anzeigemittel, und/oder das Anzeigemittel als Druckschichten ausgebildet sind. Hierbei kann die Transponderantenne und/oder das Anzeigemittel und/oder die Verbindungen mittels einer Tinte geschaffen werden, welche elektrisch leitende oder halbleitende Partikel und/oder fumbildende Polymere, wie folgend beschrieben, enthält.

Gemäß der Erfindung werden Anzeigemittel eingesetzt, deren optische Zustandsänderungen erst unter Bestrahlung effektiv wird. Z.B. organische Halbleiterpolymere, die unter UV-Bestrahlung die Farbe von einem leichten Braun zu hellem Blau ändern und im Übrigen unter der Bestrahlung für IR transparent werden, sind von der Firma Optodot Corp (MA, USA) erhältlich.

Auch organische Halbleiter auf Polythiophene-Basis zeigen optische Effekte unter UV-Bestrahlung (erhältlich von Dow Chemicals oder Merck). Solche Materialien können dahingehend modifiziert sein, dass die Änderung unter Bestrahlung nur dann eintritt, wenn gleichzeitig ein Stromfluss durch den Polymerhalbleiter (ab 50 µA) stattfindet.

Vorzugsweise ist die Transponderantenne, wie bereits erwähnt, als Antennendruckschicht mit elektrisch leitenden Pigmentpartikeln ausgebildet. Dann kann die Transponderantenne mittels üblicher Drucktechniken auf ein Substrat des Dokumentes aufgebracht werden. Geeignete Tinten bzw. elektrisch leitende Pigmentpartikel sind beispielsweise metallische Nanopartikel, wie magnetische oder nichtmagnetische Eisenoxydpartikel mit einer spezifischen Oberfläche im Bereich 60 bis 200 m²/g. Beispiel hierfür sind Produkte der Firma NanoChemonics, NM, USA. Weitere Beispiele geeigneter Tinten bzw. Beschichtungsmittel sind die Produkte IJAg-150-Fx oder AG-IJ-G-100-S1 (Silberbasis mit Partikeldurchmesser zwischen 30 und 50 nm), welche mittels Tintenstrahldruck aufbringbar sind. Diese Beschichtungsmittel zeichnen sich zudem dadurch aus, dass eine Leitschicht erst durch einen Aktivierungsschritt, z.B. Laserbestrahlung mit 500 bis 580 nm, im Wege der Sinterung der Partikel entsteht. Die an sich nicht leitfähige Schicht wird mit der Bestrahlung hoch leitfähig. Schließlich sind Siebdruckfarben mit leitfähigen Partikeln der Firmen Dupont (5028 oder 5029) und Spraylat einsetzbar, welche durch Wärmeeinwirkung ihre Leitfähigkeit erhöhen, insbesondere vervielfachen.

Durch den Einsatz von aktivierbaren Beschichtungen wird ein Dokument erst nach Aktivierung einsatzbereit und letztendlich gebrauchsfertig, was die Sicherheit vor Mißbrauch zusätzlich erhöht. Bei der Transponderschaltung und der Transponderantenne kann es sich beispielsweise um RF-(Radiofrequenz) Transponder (z.B. 13,56 MHz entsprechende ISO 14443 und ISO 15693), Mikrowellentransponder, elekromagnetische Transponder (Niederfrequenzbereich 10 bis 20.000 Hz), oder Oberflächenwellentransponder handeln. Der Datenaustausch mit der Transponderauslesevorrichtung kann in Vollduplexverfahren, Halbduplexverfahren, oder sequenziell erfolgen. Es kann sich um aktive pder passive Transponder handelt. In ersterem Fall umfasst die Transponderschaltung eine eigene Quelle für elektrische Energie. In letzterem Falle wird Energie in die Transponderantenne eingekoppelt, beispielsweise induktiv oder kapazitiv.

In Hinblick auf die Anordnung der Transponderantenne relativ zur der Anzeigedruckschicht bestehen die verschiedensten Variationsmöglichkeiten.

Zum Einen können die Transponderantenne und die Anzeigedruckschicht parallel zueinander verlaufend und aufeinander gestapelt oder lateral unmittelbar benachbart angeordnet sein. In ersterem Fall werden die Transponderantenne und die Anzeigedruckschicht nacheinander auf das Substrat des Dokumentes aufgebracht, so dass eine Schichtfolge "Substrat, Transponderantenne, Anzeigedruckschicht" oder "Substrat, Anzeigedruckschicht, Transponderantenne" entsteht. In der zweiten Alternative versteht es sich, dass die Transponderantenne oder das Substrat zumindest in Teilbereichen lichtdurchlässig sein muss. Im Falle der lateral benachbarten Anordnung können Transponderantenne und Anzeigedruckschicht gleichzeitig oder nacheinander auf das Substrat des Dokumentes aufgebracht werden.

Die Transponderantenne kann aus zwei flächigen Transponderteilantennen gebildet sein, welche parallel zueinander verlaufend und aufeinander gestapelt oder lateral beabstandet benachbart angeordnet sind, wobei die Anzeigedruckschicht zwischen den beiden Transponderteilantennen angeordnet ist.

Bei Stapelung liegt eine Schichtfolge "Substrat, erste Transponderteilantenne, Anzeigedruckschicht, zweite Transponderteilantenne" vor, wobei eine der beiden Transponderteilentenne oder beide der Transponderteilantennen zumindest in Teilbereichen lichtdurchlässig ist bzw. sind. Im Falle der lichtdurchlässigen ersten Transponderteilantenne versteht es sich, dass auch das Substrat zumindest teilweise lichtdurchlässig sein sollte.

Bei lateraler Beabstandung bildet das Substrat eine erste Schicht und in einer hierauf angebrachten zweiten Schicht sind die erste Transponderteilantenne, die Anzeigedruckschicht und die zweite Transponderteilantenne nebeneinander angeordnet.

In allen Fällen werden die beiden Transponderteilantennen bei aktivierter Transponderschaltung so angesteuert, dass zwischen ihnen eine Potentialdifferenz entsteht, welche für die Veränderung der optischen Eigenschaften der Anzeigedruckschicht hinreichend ist.

Alternativ kann eine einzige Transponderantenne vorgesehen sein, wobei die Anzeigedruckschicht parallel hierzu verlaufend und die Transponderantenne und die Anzeigedruckschicht in beliebiger Folge aufeinander gestapelt oder lateral beabstandet benachbart angeordnet sind. Dann kann auf der der Transponderantenne gegenüberliegenden Seite der Anzeigedruckschicht eine Leitschicht, beispielsweise eine ITO Folie (Indium Tin Oxide), angeordnet sein, wodurch wiederum eine Potentialdifferenz an die Anzeigedruckschicht angelegt werden kann. Dann sind die folgenden Schichtfolgen möglich: "Substrat, Leitschicht, Anzeigedruckschicht, Transponderantenne" oder "Substrat, Transponderantenne, Anzeigedruckschicht, Leitschicht", wobei die jeweils zuoberst angeordnete Schicht und/oder das Substrat mit zwischen Substrat und Anzeigedruckschicht liegenden Schichten zumindest in Teilbereichen lichtdurchlässig sein können.

Weiterhin alternativ können im Falle der Ausführung der Transponderantenne als Antennendruckschicht diese Antennendruckschicht und die Anzeigedruckschicht als eine einzige einheitliche Schicht, enthaltend sowohl optisch variable Partikel und als auch elektrisch leitende Partikel, ausgebildet sein. Dann können Transponderantenne und Anzeigedruckschicht in einem einzigen Druckverfahrensschritt auf das Substrat aufgebracht werden.

Erfindungsgemäss, sind die optisch variablen Partikel durch Einstrahlung elektromagnetischer Strahlung, insbesondere Laserstrahlung im IR-, sichtbaren, und/oder UV-Bereich aktivierbar. Der Begriff der Aktivierung meint hierbei, dass erst durch einen Aktivierungsverfahrensschritt, wie vorstehend genannt, die optisch variablen Partikel ihre optisch variable Eigenschaft entwickeln bzw. die Antennendruckschicht ihre Antennenfunktionalität (meist Leitfähigkeit) entwickelt.

Im Falle der Ausführungsformen mit Anzeigedruckschicht und/oder Antennendruckschicht werden typischerweise Tinten eingesetzt, die neben den betreffenden Pigmentpartikeln bzw. Partikeln für Tinten übliche Hilfsstoffe, Zusatzstoffe, Lösemittel usw. enthalten. Lösemittel sind beispielsweise: Wasser, aliphatische und aromatische Kohlenwasserstoffe, beispielsweise Toluol oder XyIol, Ester, Ether, Alkohole, organische Säuren und Mischungen solcher Stoffe. Hilfsstoffe sind beispielsweise tintentypische Antischaummittel, Antiabsetzmittel, Viskositätsregler, UV-Stabilisatoren, Penetrationsmittel, Stellmittel, Biozide, Puffersubstanzen, anionische oder kathionische Tenside usw. Zusatzstoffe können Bindemittelpolymere, Füllstoffe, Pigmente usw. sein.

Als Druckverfahren für die Anzeigedruckschicht und/oder die Antennendruckschicht kommen insbesondere in Frage: Offsetdruck, Siebdruck, Tintenstrahldruck, Rastatiefdruck, (Stahl) Stichtiefdruck, Flexodruck und Gravurdruck. Neben Druckverfahren kann aber auch die Aufbringung von Schichten auf galvanotechnischem Wege, durch Ätzen oder durch Spritztechniken mit Zerstäubung des Beschichtungsmittels eingesetzt werden.

Die Erfindung betrifft des Weiteren ein Verfahren zur Herstellung eines erfindungsgemäßen Sicherheits- und/oder Wertdokumentes, wobei auf ein Substrat des Sicherheits- und/oder Wertdokumentes eine elektronische Transponderschaltung, eine mit der Transponderschaltung elektrisch verbundene Transponderantenne sowie mit der Transponderantenne verbundene Anzeigemittel aufgebracht werden. Anschließend kann, muss aber nicht, eine vorzugsweise im Sichtbaren transparente Schutzschicht aufgebracht werden.

Die Transponderantenne ist vorzugsweise als Antennendruckschicht durch Aufdrucken einer Tinte mit elektrisch leitenden oder halbleitenden Partikeln aufgebracht. Die Anzeigemittel sind vorzugsweise als Anzeigedruckschicht durch Aufdrucken einer Tinte mit optisch variablen Pigmentpartikeln aufgebracht. Die Antennendruckschicht und die Anzeigedruckschicht können nebeneinander oder aufeinander gestapelt auf das Substrat aufgedruckt werden.

Im Rahmen des erfindungsgemäßen Verfahrens gelten alle Ausführungen zum Sicherheits- und/oder Wertdokument analog. Insbesondere können die vorstehend beschriebenen Schichtfolgen durch nacheinander auszuführende Druckverfahxensschritte erzeugt werden. Im Falle lateral liegender Anzeigedruckschicht und Antennendruckschicht können diese gleichzeitig oder nacheinander aufgedruckt werden. Des Weiteren können zwischen verschiedenen Druckverfahrensschritten Fixierungsverfahrens schritte, beispielsweise Trocknungsverfahrensschritte, ggf. mit Wärmebehandlungen im Bereich von 20°C bis 300°C, oder Härtungsverfahrensschritte, ggf. mit Wärmebehandlungen im Bereich von 20°C bis 300°C und/oder UV- oder IR-Bestrahlung, zwischengeschaltet sein.

## Patentansprüche

1. Sicherheits- und/oder Wertdokument mit einer elektronischen Transponderschaltung,
wobei die Transponderschaltung mit einer Transponderantenne verbunden ist,
wobei die Transponderantenne mit Mitteln zur Anzeige einer Aktivierung der Transponderantenne verbunden
ist, **dadurch gekennzeichnet, dass** die Mittel Partikel umfassen, wobei die Partikel durch Einstrahlung elektromagnetischer Strahlung zu optisch variablen Partikel aktivierbar sind,
wobei die aktivierten optisch variablen Partikel ein optisches Signal bei oder nach Aktivierung der Transponderantenne erzeugen.

2. Sicherheits- und/oder Wertdokument nach Anspruch 1, wobei die Partikel auf Basis von Halbleiterpolymeren oder organischen Halbleitern ausgebildet sind.

3. Sicherheits- und/oder Wertdokument nach einem der Ansprüche 1 bis 2, wobei die Partikel mittels einer Drucktechnologie in einer Anzeigedruckschicht in oder auf dem Dokument angebracht sind.

4. Sicherheits- und/oder Wertdokument nach einem der Ansprüche 1 bis 3, wobei die Transponderantenne mittels einer Drucktechnologie in oder auf dem Dokument angebracht ist.

5. Sicherheits- und/oder Wertdokument nach einem der Ansprüche 3 oder 4, wobei die Transponderantenne und die Anzeigedruckschicht parallel zueinander verlaufend und aufeinander gestapelt oder lateral unmittelbar benachbart auf oder in dem flächigen Dokument angeordnet sind.

6. Sicherheits- und/oder Wertdokument nach einem der Ansprüche 3 bis 5, wobei die Transponderantenne aus zwei flächigen Transponderteilantennen gebildet ist, welche parallel zueinander verlaufend und aufeinander gestapelt oder lateral beabstandet benachbart angeordnet sind, und wobei die Anzeigedruckschicht zwischen den beiden Transponderteilantennen angeordnet sind.

7. Sicherheits- und/oder Wertdokument nach einem der Ansprüche 1 bis 5, wobei eine einzige Transponderantenne und die Anzeigedruckschicht parallel zueinander verlaufend und aufeinander gestapelt oder lateral beabstandet benachbart angeordnet sind, und wobei auf der der Transponderantenne gegenüberliegenden Seite der Anzeigedruckschicht eine Leitschicht angeordnet ist.

8. Sicherheits- und/oder Wertdokument nach einem der Ansprüche 1 bis 7, wobei die Partikel elektrisch, leitende oder halbleitende Partikel sind, welche durch Laserstrahlung im IR-, sichtbaren, und/oder UV-Bereich aktivierbar sind.

9. Verfahren zur Herstellung eines Sicherheits- und/oder Wertdokumentes nach einem der Ansprüche 1 bis 8, wobei auf ein Substrat des Sicherheits- und/oder Wertdokumentes eine elektronische Transponderschaltung, eine mit der Transponderschaltung elektrisch verbundene Transponderantenne sowie mit der Transponderantenne verbundene Partikelaufgebracht werden, welche durch Einstrahlung elektromagnetischer Strahlung zu optisch variablen Partikel aktivierbar sind.

10. Verfahren nach Anspruch 9, wobei anschließend eine vorzugsweise im Sichtbaren transparente Schutzschicht aufgebracht wird.

11. Verfahren nach Anspruch 9 oder 10, wobei die Transponderantenne als Antennendruckschicht durch Aufdrucken einer Tinte mit elektrisch leitenden oder halbleitenden Partikeln aufgebracht wird.

12. Verfahren nach einem der Ansprüche 9 bis 11, wobei die Partikel als Anzeigedruckschicht durch Aufdrucken einer Tinte mit den Partikeln aufgebracht werden.

13. Verfahren nach Anspruch 12, wobei die Antennendruckschicht und die Anzeigedruckschicht nebeneinander oder aufeinander gestapelt auf das Substrat aufgedruckt werden.

## Claims

1. A security and/or value document comprising an electronic transponder circuitry,
the transponder circuitry being connected to a transponder antenna,
the transponder antenna being connected to means for displaying an activation of the transponder antenna,
**characterized in that** the means comprise particles, wherein the particles can be activated by irradiation of electromagnetic radiation so to form optically variable particles,
wherein the activated optically variable particles produce an optical signal at or after activation of the transponder antenna.

2. The security and/or value document according to claim 1, wherein the particles are formed on the basis of semiconductor polymers or organic semiconductors.

3. The security and/or value document according to one of claims 1 to 2, wherein the particles are applied by means of a printing technology in a display printing layer in or on the document.

4. The security and/or value document according to one of claims 1 to 3, wherein the transponder antenna is applied by means of a printing technology in or on the document.

5. The security and/or value document according to one of claims 3 or 4, wherein the transponder antenna and the display printing layer are disposed in parallel to each other and are stacked on each other or are laterally immediately adjacent on or in the planar document.

6. The security and/or value document according to one of claims 3 to 5, wherein the transponder antenna is formed of two planar transponder partial antennae, which are disposed in parallel to each other and are stacked on each other or are disposed laterally spaced and adjacent, and wherein the display printing layer is disposed between the two transponder partial antennae.

7. The security and/or value document according to one of claims 1 to 5, wherein one single transponder antenna and the display printing layer are disposed in parallel to each other and are stacked on each other or are disposed laterally spaced and adjacent, and wherein on the side of the transponder antenna opposite to the display printing layer a conductor layer is disposed.

8. The security and/or value document according to one of claims 1 to 7, wherein the particles are electrically conducting or semiconducting particles, which can be activated by laser radiation in the IR, visible, and/or UV range.

9. A method for producing a security and/or value document according to one of claims 1 to 8, wherein on a substrate of the security and/or value document an electronic transponder circuitry, a transponder antenna electrically connected to the transponder circuitry and particles connected to the transponder antenna are applied, which can be activated by irradiation of electromagnetic radiation so to form optically variable particles.

10. The method according to claim 9, wherein subsequently a protective layer preferably being transparent in the visible range is applied.

11. The method according to claim 9 or 10, wherein the transponder antenna is applied as an antenna printing layer by imprinting an ink with electrically conducting or semiconducting particles.

12. The method according to one of claims 9 to 11, wherein the particles are applied as a display printing layer by imprinting an ink with the particles.

13. The method according to claim 12, wherein the antenna printing layer and the display printing layer are imprinted side by side or stacked on each other on the substrate.

## Revendications

1. Document de sécurité et/ou de valeur comprenant un circuit transpondeur électronique,
le circuit transpondeur étant raccordé à une antenne de transpondeur,
l'antenne de transpondeur étant raccordée à des moyens d'affichage d'une activation de l'antenne de transpondeur,
**caractérisé en ce que** les moyens comprennent des particules, les particules pouvant être activées par irradiation de rayons électromagnétiques pour former des particules optiquement variables,
dans lequel les particules optiquement variables activées produisent un signal optique lors de ou après l'activation de l'antenne de transpondeur.

2. Document de sécurité et/ou de valeur selon la revendication 1, dans lequel les particules sont formées sur la base de polymères semi-conducteurs ou de semi-conducteurs organiques.

3. Document de sécurité et/ou de valeur selon une des revendications 1 à 2, dans lequel les particules sont appliquées au moyen d'une technologie d'impression dans une couche d'impression d'affichage dans ou sur le document.

4. Document de sécurité et/ou de valeur selon une des revendications 1 à 3, dans lequel l'antenne de transpondeur est appliquée au moyen d'une technologie d'impression dans ou sur le document.

5. Document de sécurité et/ou de valeur selon une des revendications 3 ou 4, dans lequel l'antenne de transpondeur et la couche d'impression d'affichage sont disposées en parallèle l'une à l'autre et sont empilées l'une sur l'autre ou sont latéralement immédiatement voisines sur ou dans le document plat.

6. Document de sécurité et/ou de valeur selon une des revendications 3 à 5, dans lequel l'antenne de transpondeur est formée de deux antennes de transpondeur partielles plates, qui sont disposées en parallèle l'une à l'autre et sont empilées l'une sur l'autre ou sont disposées latéralement espacées et voisines, et dans lequel la couche d'impression d'affichage est disposée entre les deux antennes de transpondeur partielles.

7. Document de sécurité et/ou de valeur selon une des revendications 1 à 5, dans lequel une seule antenne de transpondeur et la couche d'impression d'affichage sont disposées en parallèle l'une à l'autre et sont empilées l'une sur l'autre ou sont disposées latéralement espacées et voisines, et dans lequel sur le côté de l'antenne de transpondeur opposé à la couche d'impression d'affichage une couche conductrice est disposée.

8. Document de sécurité et/ou de valeur selon une des revendications 1 à 7, dans lequel les particules sont des particules électriquement conductrices ou semi-conductrices, qui peuvent être activées par des rayons laser dans la partie IR, visible et/ou UV.

9. Procédé de fabrication d'un document de sécurité et/ou de valeur selon une des revendications 1 à 8, dans lequel sur un substrat du document de sécurité et/ou de valeur un circuit transpondeur électronique, une antenne de transpondeur électriquement raccordée au circuit transpondeur et des particules raccordées à l'antenne de transpondeur sont appliqués, qui peuvent être activés par irradiation de rayons électromagnétiques pour former des particules optiquement variables.

10. Procédé selon la revendication 9, dans lequel à la suite une couche protectrice de préférence étant transparente dans la partie visible est appliquée.

11. Procédé selon la revendication 9 ou. 10, dans lequel l'antenne de transpondeur est appliquée comme couche d'impression d'antenne par impression d'une encre avec des particules électriquement conductrices ou semi-conductrices.

12. Procédé selon une des revendications 9 à 11, dans lequel les particules sont appliquées comme couche d'impression d'affichage par impression d'une encre avec les particules.

13. Procédé selon la revendication 12, dans lequel la couche d'impression d'antenne et la couche d'impression d'affichage sont imprimées l'une à côté de l'autre ou sont empilées l'une sur l'autre sur le substrat.
